# EUROPÄISCHE PATENTSCHRIFT

(11) **EP 4 183 298 B1**
(45) Veröffentlichungstag und Bekanntmachung des Hinweises auf die Patenterteilung: **01.04.2026**
(21) Anmeldenummer: 22203508.1
(22) Anmeldetag: 25.10.2022
(51) Int. Cl.: A47J 36/32, A47J 37/06, A47J 37/07, A47J 45/06, F24C 7/08, H05B 6/64, H05B 1/02

(54) **GARGEFÄSS, SYSTEM MIT EINEM GARGEFÄSS UND EINER EXTERNEN COMPUTEREINHEIT UND VERFAHREN ZUM BETRIEB DES GARGEFÄSSES ODER DES SYSTEMS**
COOKING VESSEL, SYSTEM COMPRISING A COOKING VESSEL AND AN EXTERNAL COMPUTER UNIT AND METHOD FOR OPERATING THE COOKING VESSEL OR THE SYSTEM
RÉCIPIENT DE CUISSON, SYSTÈME COMPRENANT UN RÉCIPIENT DE CUISSON ET UNE UNITÉ INFORMATIQUE EXTERNE ET PROCÉDÉ DE FONCTIONNEMENT DU RÉCIPIENT DE CUISSON OU DU SYSTÈME

(30) Priorität: 22.11.2021 BE 202105900
(43) Veröffentlichungstag der Anmeldung: 24.05.2023
(73) Patentinhaber: Miele & Cie. KG, 33332 Gütersloh (DE)
(72) Erfinder: Hölscher, Britta, 30167 Hannover (DE)

(56) Entgegenhaltungen:
- WO-A2-2010/116233
- CN-A- 106 308 463
- CN-A- 110 384 397
- CN-A- 111 830 854
- CN-U- 203 776 647
- DE-A1- 102017 213 427
- DE-A1- 102019 119 720
- DE-U1- 202014 005 714

## Beschreibung

Die Erfindung betrifft ein Gargefäß der im Oberbegriff des Patentanspruchs 1 genannten Art, ein System mit einem Gargefäß und einer externen Computereinheit und ein Verfahren zum Betrieb eines Gargefäßes oder eines Systems.

Derartige Gargefäße, Systeme und Verfahren sind aus dem Stand der Technik in einer Vielzahl von Ausführungsformen bereits vorbekannt. Die bekannten Gargefäß umfassen dabei ein Gehäuse und einen in dem Gehäuse angeordneten Aufnahmeraum zur Aufnahme eines Gargut und/oder eines Küchenutensils, wobei der Aufnahmeraum von mindestens einer Gehäusewand und einem Gehäuseboden des Gehäuses begrenzt ist.

Die Druckschrift DE 20 2014 005 714 U1 offenbart ein Gargefäß mit einem Griff und einer Anzeige in dem Griff.

Die Druckschrift WO 2010 116 233 A2 offenbart eine Projektionseinheit zum Anbringen am Rand eines Gargefäßes.

Der Erfindung stellt sich somit das Problem, ein Gargefäß, ein System mit einem Gargefäß und einer externen Computereinheit und ein Verfahren zum Betrieb eines Gargefäßes oder eines Systems zu verbessern.

Erfindungsgemäß wird dieses Problem durch ein Gargefäß mit den Merkmalen des Patentanspruchs 1 gelöst. Ferner wird dieses Problem durch ein System mit den Merkmalen des Patentanspruchs 6 und ein Verfahren mit den Merkmalen des Patentanspruchs 8 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Gargefäß, ein System mit einem Gargefäß und einer externen Computereinheit und ein Verfahren zum Betrieb eines Gargefäßes oder eines Systems verbessert sind. Aufgrund der erfindungsgemäßen Ausbildung des Gargefäßes, des Systems und des Verfahrens ist eine flexible und interaktive Benutzung des Gargefäßes, des Systems und des Verfahrens realisierbar. Entsprechend ist der Benutzerkomfort wesentlich gesteigert und eine komfortable sowie sichere Nutzerführung ermöglicht.

Grundsätzlich ist das erfindungsgemäße Gargefäß nach Art, Funktionsweise, Material und Dimensionierung in weiten geeigneten Grenzen frei wählbar. Es ist möglich, dass das erfindungsgemäße Gargefäß als ein Küchenutensil, beispielsweise ein Kochtopf oder eine Bratpfanne, ausgebildet ist.

Mit einer Projektion in den freien Luftraum ist erfindungsgemäß ein Hologramm gemeint.

Eine vorteilhafte Weiterbildung des erfindungsgemäßen Gargefäß sieht vor, dass die Projektionseinheit eine Steuerung und einen mit der Steuerung signalübertragend verbundenen Projektor zur Erzeugung und Emittierung einer Projektion der Benutzerinformation umfasst, bevorzugt, dass die Projektionseinheit zusätzlich mindestens eine der nachfolgend genannten Komponenten aufweist: eine mit der Steuerung signalübertragend verbundene Kommunikationsvorrichtung zum Empfang von Signalen von einer externen Computereinheit und zum Senden von Signalen an die externe Computereinheit, eine mit der Steuerung signalübertragend verbundene Ausgabeeinheit zur Ausgabe eines optischen und/oder akustischen Benutzerhinweises an den Benutzer, einen mit der Steuerung energieübertragend verbundenen Energiespeicher, eine in einem Projektionsweg zwischen dem Projektor und der Projektionsfläche und/oder dem freien Luftraum angeordnete Optik zur dichten Abdeckung der Projektionseinheit von dem Aufnahmeraum, bevorzugt zur optischen Beeinflussung der von dem Projektor emittierten Projektion. Hierdurch ist das erfindungsgemäße Gargefäß, nämlich deren Projektionseinheit, auf besonders vorteilhafte Art und Weise realisierbar. Dies gilt insbesondere für die bevorzugte Ausführungsform dieser Weiterbildung.

Eine vorteilhafte Weiterbildung der vorgenannten Weiterbildung des erfindungsgemäßen Gargefäßes sieht vor, dass die Optik als ein Objektiv, bevorzugt ein Weitwinkelobjektiv, und/oder als eine Maske mit Lichtdurchtrittsflächen für einen Lichtdurchtritt und Lichtabdeckungsflächen zur Verhinderung eines Lichtdurchtritts ausgebildet ist. Auf diese Weise ist die Optik zur optischen Beeinflussung der von dem Projektor emittierten Projektion besonders vorteilhaft ausgebildet. Dies gilt insbesondere für die bevorzugte Ausführungsform dieser Weiterbildung.

Eine weitere vorteilhafte Weiterbildung des erfindungsgemäßen Gargefäßes sieht vor, dass die Projektionseinheit zumindest teilweise, bevorzugt vollständig, in dem Gehäuse oder in einem an dem Gehäuse angeordneten Griff des Gargefäßes angeordnet ist. Hierdurch ist die Projektionseinheit zum einen leicht vor Verunreinigungen und störenden Umwelteinflüssen schützbar. Zum anderen ist die Projektionseinheit optisch unauffällig und damit den ästhetischen Gesamteindruck des erfindungsgemäßen Gargefäßes nicht negativ beeinflussend an dem Gehäuse des erfindungsgemäßen Gargefäßes angeordnet. Dies gilt insbesondere für die bevorzugte Ausführungsform dieser Weiterbildung.

Bei dem erfindungsgemäßen Gargefäß ist vorgesehen, dass die Projektionseinheit spülmaschinengeeignet ausgebildet oder spülmaschinengeeignet an oder in dem Gehäuse angeordnet ist. Auf diese Weise ist die Benutzerfreundlichkeit des erfindungsgemäßen Gargefäßes weiter verbessert.

Eine besonders vorteilhafte Weiterbildung des erfindungsgemäßen Gargefäßes sieht vor, dass an oder in dem Gehäuse mindestens ein mit dem Aufnahmeraum in Wirkverbindung und mit der Steuerung in Signalübertragungsverbindung stehender Sensor des Gargefäßes zur Erfassung eines Füllstands eines in den Aufnahmeraum eingefüllten Garguts angeordnet ist, bevorzugt, dass mindestens einer des mindestens einen Sensors als ein optischer Sensor, besonders bevorzugt ein Lichtbrechungssensor, ausgebildet ist, wobei die Steuerung derart ausgebildet ist, dass das Gargefäß und/oder die Kommunikationsvorrichtung in Abhängigkeit eines von dem Sensor an die Steuerung weitergeleiten Messsignals mittels der Steuerung ansteuerbar sind/ist. Hierdurch ist die Interaktion zwischen dem erfindungsgemäßen Gargefäß auf der einen Seite und einem Benutzer des erfindungsgemäßen Gargefäßes auf der anderen Seite wesentlich verbessert. Darüber hinaus bieten die bevorzugte und insbesondere die besonders bevorzugte Ausführungsform dieser Weiterbildung den weiteren Vorteil, dass der mindestens eine Sensor auf für die Anwendung bei dem erfindungsgemäßen Gargefäß besonders sinnfällige Art und Weise ausgebildet ist.

Grundsätzlich ist das erfindungsgemäße System nach Art und Funktionsweise ebenfalls in weiten geeigneten Grenzen frei wählbar. Neben den verschiedenen Varianten des erfindungsgemäßen Gargefäßes kann die externe Computereinheit beispielsweise als ein Smartphone oder ein Tablet mit einer App zur Bedienung des erfindungsgemäßen Gargefäßes ausgebildet sein.

Entsprechend sieht eine vorteilhafte Weiterbildung des erfindungsgemäßen Systems vor, dass die externe Computereinheit derart ausgebildet ist, dass die mindestens eine Projektionseinheit mittels der externen Computereinheit ansteuerbar ist und/oder, dass in Abhängigkeit von dem Messsignal des mindestens einen Sensors des Gargefäßes mittels der externen Computereinheit ein optischer und/oder akustischer Benutzerhinweis an den Benutzer ausgebbar ist.

Aufgrund der Vielzahl von möglichen Ausführungsformen des erfindungsgemäßen Gargefäßes und des erfindungsgemäßen Systems ergibt sich auch eine Vielzahl von möglichen Ausgestaltungen für das erfindungsgemäße Verfahren.

Entsprechend der letztgenannten Weiterbildung des erfindungsgemäßen Systems sieht eine vorteilhafte Weiterbildung des erfindungsgemäßen Verfahrens beispielsweise vor, dass das Gargefäß in Abhängigkeit eines in der Steuerung des Gargefäßes und/oder in der externen Computereinheit laufenden Automatikprogramms mittels der Steuerung und/oder der externen Computereinheit automatisch in den Projektionsmodus überführt wird, wobei die in dem Projektionsmodus projizierte Benutzerinformation in Abhängigkeit des Automatikprogramms mittels des Projektors erzeugt und emittiert wird.

Analog dazu sieht eine alternative oder zusätzliche vorteilhafte Weiterbildung des erfindungsgemäßen Verfahrens vor, dass in Abhängigkeit des Messsignals des Sensors des Gargefäßes mittels des Gargefäßes und/oder der externen Computereinheit ein optischer und/oder akustischer Benutzerhinweis an den Benutzer ausgegeben wird.

Vier Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen Systems mit einem erfindungsgemäßen Gargefäß zur Durchführung des erfindungsgemäßen Verfahrens in einer teilweisen, geschnittenen Seitenansicht,
- Figur 2a: das erste Ausführungsbeispiel in einer ersten Variante, in teilweiser, seitlicher Schnittdarstellung, mit Blick auf das Gargefäß,
- Figur 2b: das erste Ausführungsbeispiel gemäß der Fig. 2a in einer zweiten Variante,
- Figur 2c: das erste Ausführungsbeispiel in einer dritten Variante, in teilweiser, perspektivischer Ansicht,
- Figur 2d: das erste Ausführungsbeispiel gemäß der Fig. 2c in einer vierten Variante,
- Figur 3a: das erste Ausführungsbeispiel gemäß der Fig. 2c in einer fünften Variante,
- Figur 3b: das erste Ausführungsbeispiel gemäß der Fig. 3a in einer zweiten Ansicht, analog zur Fig. 3a,
- Figur 3c: das erste Ausführungsbeispiel gemäß der Fig. 2c in einer sechsten Variante,
- Figur 4a: ein zweites Ausführungsbeispiel in einer ersten Variante in teilweiser, perspektivischer Darstellung,
- Figur 4b: das zweite Ausführungsbeispiel gemäß der Fig. 4a in einer seitlichen Schnittdarstellung,
- Figur 4c: das zweite Ausführungsbeispiel gemäß der Fig. 4b in einer zweiten Variante,
- Figur 5a: ein drittes Ausführungsbeispiel in einer ersten Variante in seitlicher Schnittdarstellung,
- Figur 5b: das dritte Ausführungsbeispiel gemäß der Fig. 5a in einer zweiten Variante,
- Figur 5c: das dritte Ausführungsbeispiel gemäß der Fig. 5a in einer dritten Variante und
- Fig. 6: ein viertes Ausführungsbeispiel in einer in seitlichen Schnittdarstellung.

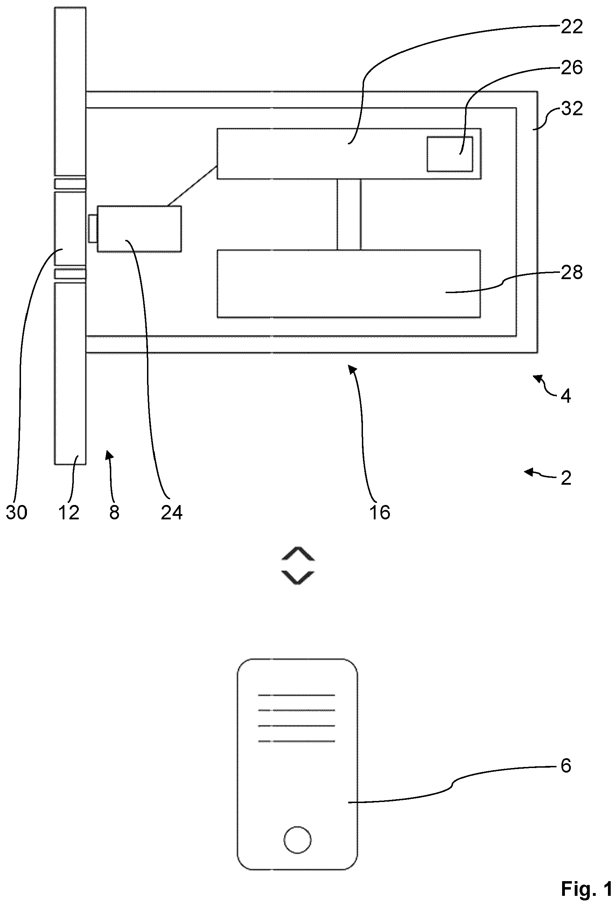

In den Fig. 1 bis 3c ist ein erstes Ausführungsbeispiel des erfindungsgemäßen Systems mit dem erfindungsgemäßen Gargefäß zur Durchführung des erfindungsgemäßen Verfahrens rein exemplarisch dargestellt.

Das System 2 des ersten Ausführungsbeispiels umfasst ein als Kochtopf ausgebildetes Gargefäß 4 und eine mit dem Gargefäß 4 signalübertragend verbundene und als Smartphone ausgebildete externe Computereinheit 6.

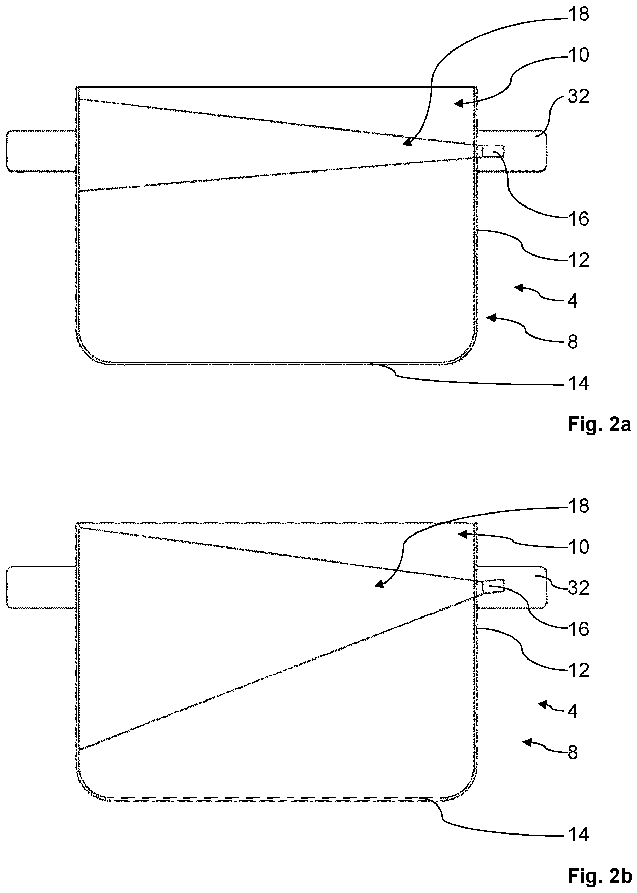

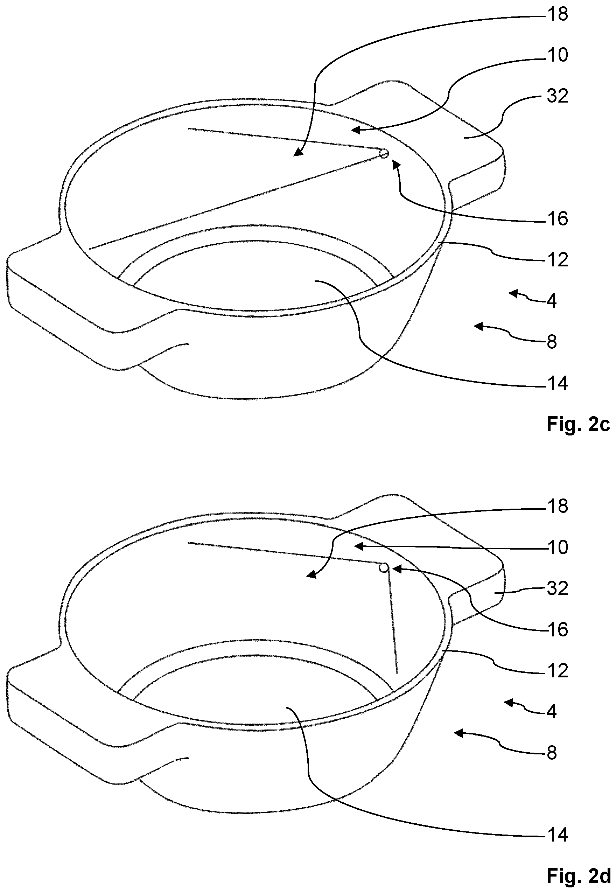

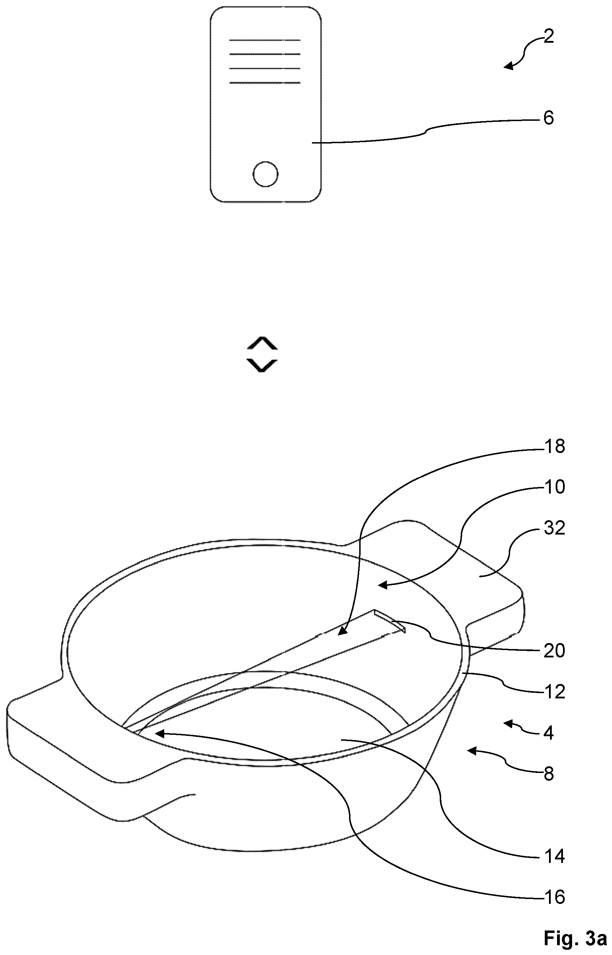

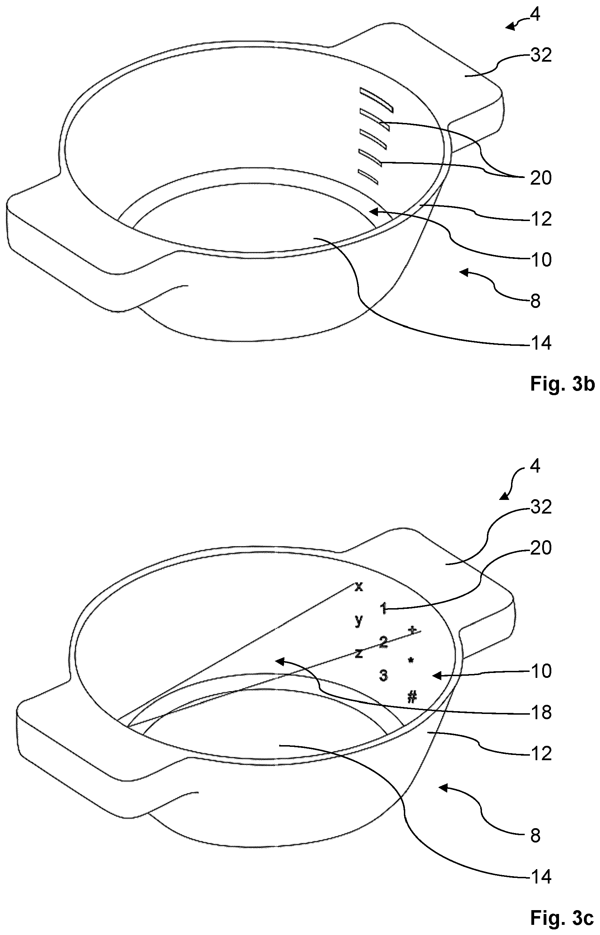

Das Gargefäß 4 weist ein Gehäuse 8 und einen in dem Gehäuse 8 angeordneten Aufnahmeraum 10 zur Aufnahme eines nicht dargestellten Garguts auf, wobei der Aufnahmeraum 10 von einer umlaufenden Gehäusewand 12 und einem Gehäuseboden 14 des Gehäuses 8 begrenzt ist. Der Aufnahmeraum 10 ist lediglich in den Fig. 2a bis 3c dargestellt. An dem Gehäuse 8 ist eine Projektionseinheit 16 des Gargefäßes 4 zur Projektion einer Projektion 18 von einer visuell wahrnehmbaren Benutzerinformation 20 auf eine Projektionsfläche des Gehäuses 8, nämlich die Gehäusewand 12, in einem in den Fig. 2a bis 3c dargestellten Projektionsmodus des Gargefäßes 4 angeordnet. Die Benutzerinformation 20 ist bei dem vorliegenden Ausführungsbeispiel entweder als eine Strichmarkierung aus einer Mehrzahl von möglichen Strichmarkierungen gemäß der Fig. 3a und 3b oder eine Zahl, ein Buchstabe und/oder ein Sonderzeichen aus einer Mehrzahl von möglichen Zahlen, Buchstaben und Sonderzeichen gemäß der Fig. 3c ausgebildet. Jedoch sind auch andere Darstellungen, beispielsweise ganze Schriftzüge, Symbole, Formen oder 7-SegmentAnzeigen, auf die vorgenannte Art und Weise projizierbar.

Die Projektionseinheit 16 weist eine Steuerung 22 und einen mit der Steuerung 22 signalübertragend verbundenen Projektor 24 zur Erzeugung und Emittierung der Projektion 18 der Benutzerinformation 20 auf. Ferner weist die Projektionseinheit 16 hier zusätzlich eine mit der Steuerung 22 signalübertragend verbundene Kommunikationsvorrichtung 26 zum Empfang von Signalen von der externen Computereinheit 6 und zum Senden von Signalen an die externe Computereinheit 6, einen mit der Steuerung 22 energieübertragend verbundenen Energiespeicher 28 und eine in einem Projektionsweg zwischen dem Projektor 24 und der Projektionsfläche, nämlich der Gehäusewand 12, angeordnete Optik 30 zur dichten Abdeckung der Projektionseinheit 16 von dem Aufnahmeraum 10 auf, wobei die Optik 30 hier gleichzeitig zur optischen Beeinflussung der von dem Projektor 24 emittierten Projektion 18 ausgebildet ist.

Hierfür ist die Optik 30 als ein Objektiv, beispielsweise ein Weitwinkelobjektiv ausgebildet. Alternativ oder zusätzlich hierzu kann es in anderen Ausführungsformen der Erfindung vorgesehen sein, dass die Optik als eine Maske mit Lichtdurchtrittsflächen für einen Lichtdurchtritt und Lichtabdeckungsflächen zur Verhinderung eines Lichtdurchtritts ausgebildet ist. Jedoch sind auch Ausführungsformen denkbar, bei denen die Optik lediglich zur dichten Abdeckung der Projektionseinheit gegenüber dem Aufnahmeraum ausgebildet ist. Beispielsweise kann eine derartige Optik als ein transparenter, also lichtdurchlässiger, Einleger aus Glas oder Plexiglas ausgebildet sein.

Der Energiespeicher 28 ist bei dem vorliegenden Ausführungsbeispiel auf dem Fachmann an sich bekannte Art und Weise wiederaufladbar ausgebildet. Möglich ist aber auch, dass der Energiespeicher in anderen Ausführungsformen der Erfindung auswechselbar ist, so dass der verbrauchte Energiespeicher durch einen mit elektrischer Energie aufgeladenen Energiespeicher ersetzt werden kann.

Analog zu der Kommunikationsvorrichtung 26 ist die externe Computereinheit 6 hier ebenfalls zum Empfang von Signalen der Kommunikationsvorrichtung 26 und zum Senden von Signalen an die Kommunikationsvorrichtung 26 ausgebildet. Beispielsweise ist hierfür WLAN oder Bluetooth auf dem Fachmann an sich bekannte Art und Weise nutzbar. Jedoch sind grundsätzlich auch andere drahtgebundene und drahtlose Signalübertragungsarten möglich.

Die Projektionseinheit 16 ist bei dem vorliegenden Ausführungsbeispiel vollständig in einem an dem Gehäuse 8 angeordneten Griff 32 des Gargefäßes 4 angeordnet. Siehe hierzu die Fig. 1. Darüber hinaus ist die Projektionseinheit 16 hier spülmaschinengeeignet in dem Griff 32 angeordnet. Denkbar ist aber auch eine zumindest teilweise Anordnung der Projektionseinheit direkt in dem Gehäuse des erfindungsgemäßen Gargefäßes. Beispielsweise ist dies bei einem doppelwandig ausgeführten Gehäuse sehr einfach umsetzbar.

An dem Gehäuse 8 ist bei dem vorliegenden Ausführungsbeispiel ferner mindestens ein mit dem Aufnahmeraum 10 in Wirkverbindung und mit der Steuerung 22 in Signalübertragungsverbindung stehender, nicht dargestellter Sensor des Gargefäßes 4 zur Erfassung eines Füllstands des in den Aufnahmeraum 10 eingefüllten Garguts angeordnet, wobei der mindestens eine Sensor als ein optischer Sensor, nämlich als ein Lichtbrechungssensor, ausgebildet ist, und wobei die Steuerung 22 derart ausgebildet ist, dass die Kommunikationsvorrichtung 26 in Abhängigkeit eines von dem Sensor an die Steuerung 22 weitergeleiten Messsignals mittels der Steuerung 22 ansteuerbar ist.

Die externe Computereinheit 6 ist hier derart ausgebildet, dass die Projektionseinheit 16 mittels der externen Computereinheit 6 ansteuerbar ist und, dass in Abhängigkeit von dem Messsignal des mindestens einen Sensors des Gargefäßes 4 mittels der externen Computereinheit 6 ein optischer und/oder akustischer Benutzerhinweis an einen nicht dargestellten Benutzer des Systems 2 ausgebbar ist.

Nachfolgend werden die Funktionsweise des erfindungsgemäßen Systems und des erfindungsgemäßen Gargefäßes sowie das erfindungsgemäße Verfahren gemäß dem ersten Ausführungsbeispiel anhand der Fig. 1 bis 3c näher erläutert.

Zunächst befindet sich das Gargefäß 4 des Systems 2 in einem Nicht-Projektionsmodus, so dass mittels der Projektionseinheit 24 keine Projektion erzeugt und emittiert wird.

Auf der als Smartphone ausgebildeten externen Computereinheit 6 ist eine App zur Bedienung des Gargefäßes 4 und zur Durchführung von mittels der App auf dem Fachmann an sich bekannte Art und Weise aus einem Speicher, beispielsweise einer Cloud oder dergleichen, aufrufbaren Automatikprogrammen zum Garen von voneinander verschiedenen Gargütern in dem Aufnahmeraum 10 des Gargefäßes 4 installiert. Der Benutzer wählt mittels der App ein entsprechendes Automatikprogramm, beispielsweise ein Kochprogramm zum Kochen von Wasser für eine bestimmte Anzahl von Hühnereiern, aus.

Nachdem der Benutzer das Automatikprogramm, beispielsweise das vorgenannte Kochprogramm zum Kochen von Wasser, gestartet hat, wird das Gargefäß 4 in Abhängigkeit des in der externen Computereinheit 6 laufenden Automatikprogramms mittels der Steuerung 22 und der externen Computereinheit 6 automatisch in den Projektionsmodus überführt. In dem Projektionsmodus wird mittels des Projektors 24 eine zu dem ausgewählten Automatikprogramm und in diesem vorgenommenen Einstellungen korrespondierende Projektion 18 erzeugt und emittiert. Beispielsweise wird mittels der Projektionseinheit 16 auf die Gehäusewand 12 eine als Strichmarkierung ausgebildete Benutzerinformation projiziert, so dass der Benutzer direkt an dem Gargefäß 4 erkennen kann, wie hoch er den Aufnahmeraum 10 mit Wasser befüllen muss, um die von dem Benutzer ausgewählte Anzahl von Hühnereiern zu kochen. Siehe hierzu die Fig. 3a. In der Fig. 3b ist die Mehrzahl von möglichen Projektionen, also von möglichen Benutzerinformationen, dargestellt, mittels der dem Benutzer unterschiedliche Füllstände für in den Aufnahmeraum 10 einfüllbare Gargüter angezeigt werden können. Mittels der App auf der externen Computereinheit 6 kann der Benutzer hierbei zusätzlich angeleitet werden. Dies kann beispielsweise auch für die weiteren Benutzerinformationen gelten, so dass der Benutzer in diesen Fällen sowohl die direkte Benutzerinformation an dem Gargefäß 4 wie auch eine zusätzliche, beispielsweise erläuternde, Information mittels der externen Computereinheit 6 erhält.

Sobald der Benutzer den Aufnahmeraum 10 mit dem Wasser bis zu der als Strichmarkierung ausgebildeten Benutzerinformation gemäß der Fig. 3a aufgefüllt hat, wird dies mittels des mindestens einen Sensors automatisch erkannt und mittels der Kommunikationsvorrichtung 26 an die externe Computereinheit 6, also das Smartphone, übermittelt. In Abhängigkeit des Messsignals des Sensors des Gargefäßes 4 wird dann mittels der externen Computereinheit 6 ein optischer und/oder akustischer Benutzerhinweis an den Benutzer ausgegeben.

Der Benutzer kann nun die vorher festgelegte Anzahl von Hühnereiern in den Aufnahmeraum 10 und damit in das in dem Aufnahmeraum 10 befindliche Wasser legen und den Kochvorgang mittels der auf der externen Computereinheit 6 installierten App starten. Beispielsweise ist es hierfür denkbar, dass der Benutzer mittels einer weiteren Projektion, also einer weiteren Benutzerinformation, unterstützt wird. So könnte beispielsweise die Anzahl der Hühnereier auf die vorgenannte Art und Weise auf die Gehäusewand 12 projiziert werden. Siehe hierzu die Fig. 3c. Alternativ oder zusätzlich ist es möglich, dass ein Benutzerhinweis, beispielsweise bezüglich der in den Aufnahmeraum 10 einzulegenden Anzahl von Hühnereiern, mittels der externen Computereinheit 6 auf die oben erläuterte Art und Weise an den Benutzer ausgegeben wird.

Wie aus den Fig. 2a bis 2d ersichtlich ist, kann die Projektion mittels des Projektors 24 und der als Objektiv ausgebildeten Optik 30 sehr unterschiedlich ausgebildet sein. Denkbar wäre aber auch, dass mittels der Projektionseinheit eine Projektion an der Projektionsfläche, beispielsweise der Gehäusewand, variabel gestaltet ist, so dass die Projektion über die Projektionsfläche bewegbar ist. Entsprechend ist die Flexibilität in der Projektion und damit in der Benutzerinformation noch gesteigert.

Nachfolgend werden weitere Ausführungsbeispiele der Erfindung kurz erläutert. Dabei beschränken sich die jeweiligen Ausführungen auf die Unterschiede zu den jeweils vorausgegangenen Ausführungsbeispielen. Entsprechend kann im Übrigen auf die Ausführungen zu den vorherigen Ausführungsbeispielen, insbesondere zu dem ersten Ausführungsbeispiel, verwiesen werden. Gleiche oder gleichwirkende Bauteile sind in den Fig. 1 bis 6 mit den gleichen Bezugszeichen bezeichnet.

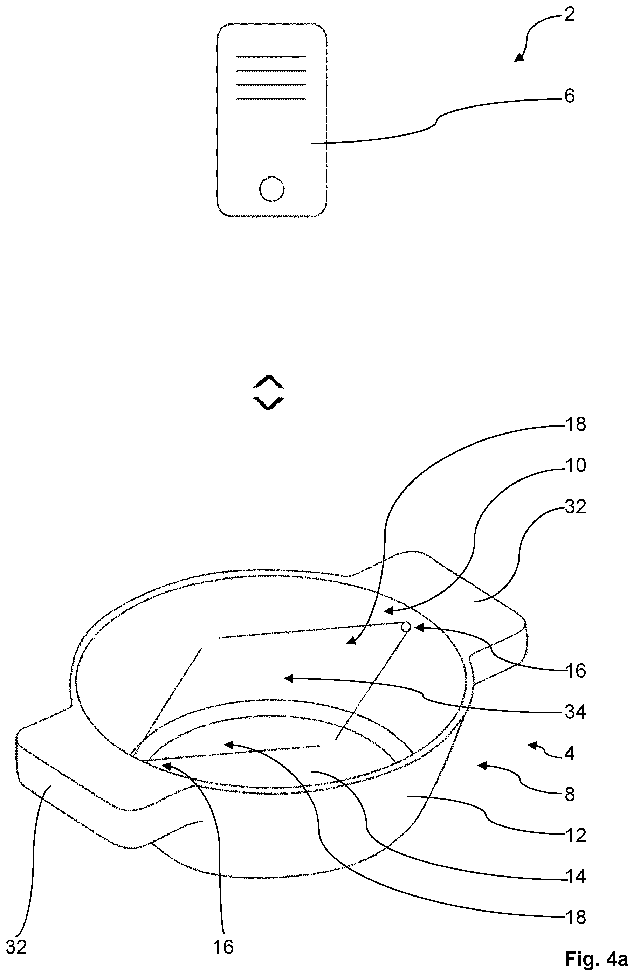

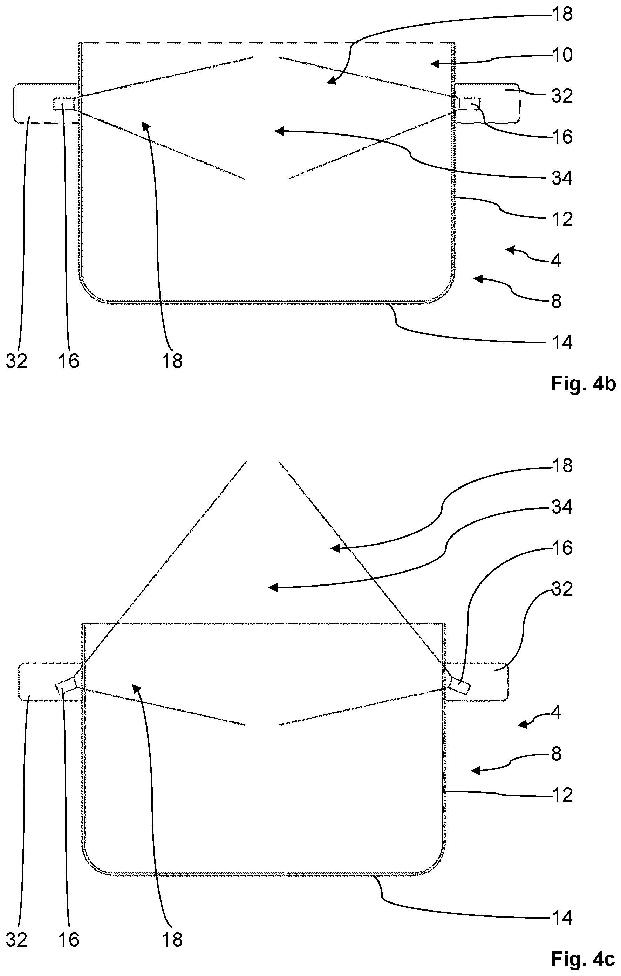

Wie aus den Fig. 4a bis 4c ersichtlich ist, kann es in einem zweiten Ausführungsbeispiel der Erfindung vorgesehen sein, dass die Projektion 18 der visuell wahrnehmbaren Benutzerinformation nicht auf eine Projektionsfläche des Gehäuses 8 erfolgt, sondern in einen freien Luftraum 34, der in und/oder über dem Aufnahmeraum 10 in einem Projektionsmodus des Gargefäßes 4 angeordnet ist. Die Benutzerinformation gemäß dem vorliegenden zweiten Ausführungsbeispiel ist also als ein Hologramm ausgebildet, dass in den Fig. 4a bis 4c in zwei Varianten dargestellt ist. Ferner verfügt das Gargefäß 4 bei dem vorliegenden Ausführungsbeispiel über zwei Projektionseinheiten 16, die jeweils in einem von zwei an dem Gehäuse 8 angeordneten Griffen 32 angeordnet sind. Ansonsten entspricht das zweite Ausführungsbeispiel dem ersten Ausführungsbeispiel. Bei der Ausbildung der Projektion 18 als Hologramm ist es beispielsweise möglich, dem Benutzer bildhaft anzuzeigen, welche Art von Gargut, in welcher räumlichen Lage und/oder in welcher Position relativ zu dem Aufnahmeraum 10 zu platzieren ist.

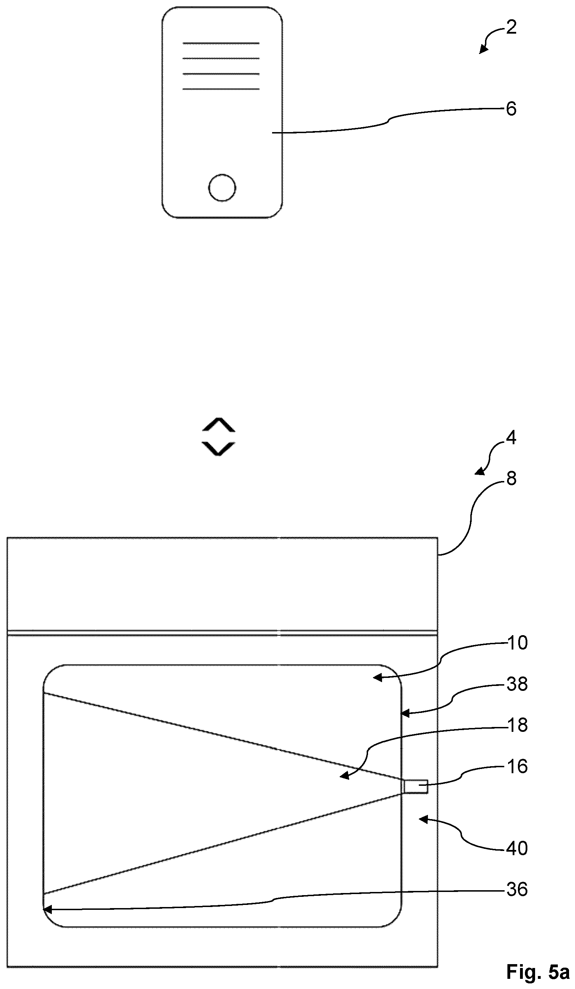

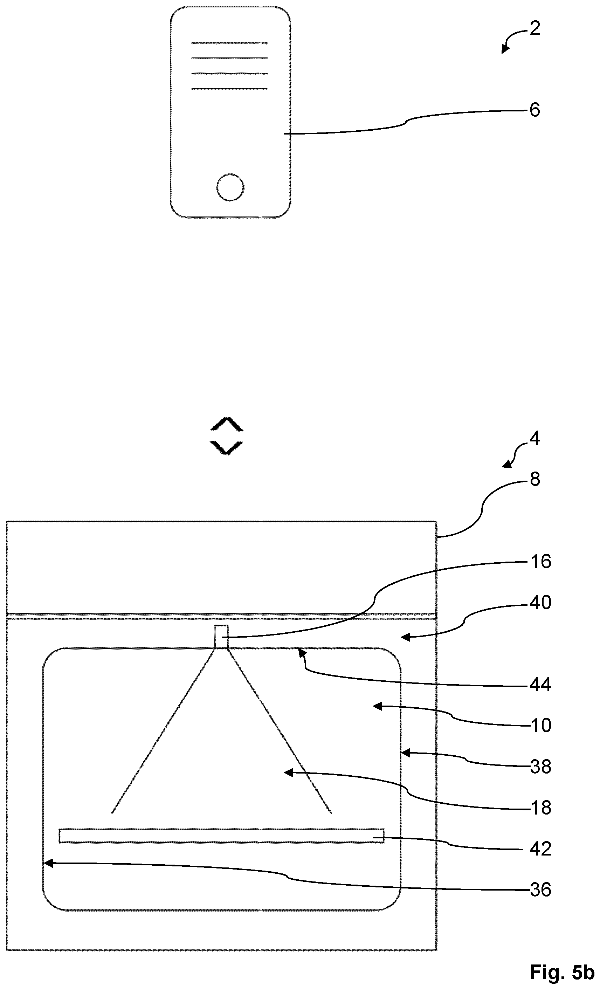

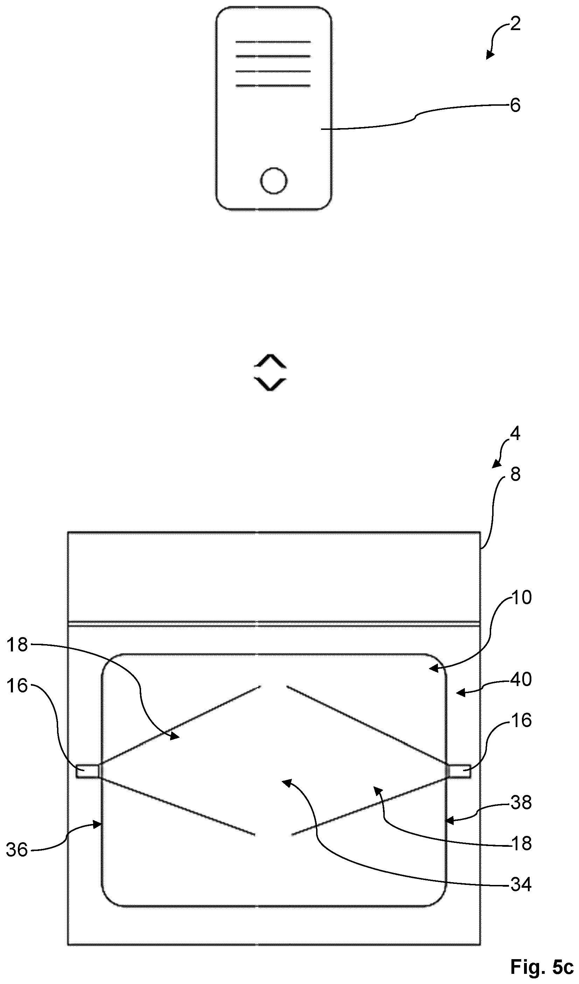

In den Fig. 5a bis 5c ist ein drittes nicht-erfindungsgemäßes Ausführungsbeispiel in insgesamt drei Varianten dargestellt. Anders als bei dem ersten und dem zweiten Ausführungsbeispiel ist kein Kochtopf und keine Bratpfanne sondern ein Backofen dargestellt. In der ersten Variante gemäß der Fig. 5a erfolgt die Projektion 18 der visuell wahrnehmbaren Benutzerinformation an eine als eine Seitenwand 36 des als Garraum ausgebildeten Aufnahmeraums 10. Hierfür ist die Projektionseinheit 16 an einer dieser Seitenwand 36 gegenüberliegend angeordneten Seitenwand 38 angeordnet, wobei die Projektionseinheit 16 in einem Zwischenraum 40 in dem Gehäuse 8 angeordnet ist. Gemäß der aus der Fig. 5b ersichtlichen zweiten Variante erfolgt die Projektion 18 auf eine als ein in den als Garraum ausgebildeten Aufnahmeraum 10 eingeschobener Gargutträger 42 ausgebildete Projektionsfläche, wobei die Projektionseinheit 16 hier an einer dem Gargutträger 42 gegenüberliegenden Garraumdecke 44 des Aufnahmeraums 10 angeordnet ist. Alternativ oder zusätzlich dazu ist es aber beispielsweise auch denkbar, dass mittels der Benutzerinformation eine für den Garvorgang erforderliche oder vorteilhafte Einschubebene für den Gargutträger 42 für den Benutzer anzeigbar ist. In einer aus der Fig. 5c hervorgehenden dritten Variante dieses Ausführungsbeispiels erfolgt die Projektion der visuell wahrnehmbaren Benutzerinformation wiederum als ein Hologramm in den freien Luftraum 34 in dem Aufnahmeraum 10. Im Unterschied zu der ersten und der zweiten Variante dieses dritten Ausführungsbeispiels verfügt das Küchengerät 4 hier, analog zu dem zweiten Ausführungsbeispiel, ebenfalls über zwei Projektionseinheiten 16, wobei die Projektionseinheiten 16 jeweils in dem Zwischenraum 40 des Gehäuses 8 an der Seitenwand 36 und an der Seitenwand 38 verbaut sind.

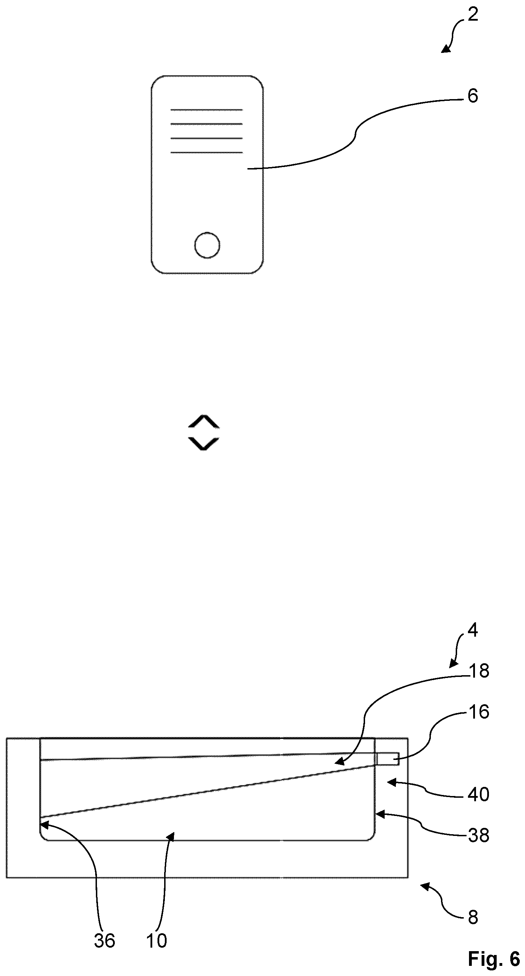

In der Fig. 6 ist ein viertes nicht-erfindungsgemäßes Ausführungsbeispiel rein exemplarisch dargestellt. Bei dem Küchengerät 4 gemäß diesem Ausführungsbeispiel handelt es sich jedoch nicht um ein Gargerät, wie dies bei den ersten drei Ausführungsbeispielen der Fall war, sondern um eine Wärmeschublade, beispielsweise zum Warmhalten von Küchenutensilien und/oder zum Warmhalten von einem auf einem Küchenutensil angeordneten Gargut. Ansonsten entspricht das vierte Ausführungsbeispiel im Wesentlichen der ersten Variante des dritten Ausführungsbeispiels.

Aufgrund der erfindungsgemäßen Ausbildung des Gargefäßes, des Systems und des Verfahrens gemäß der vorliegenden Ausführungsbeispiele ist eine flexible und interaktive Benutzung des Gargefäßes 4, des Systems 2 und des Verfahrens realisiert. Entsprechend ist der Benutzerkomfort wesentlich gesteigert und eine komfortable sowie sichere Nutzerführung ermöglicht. Mittels der Erfindung ist ferner eine Schritt-für-Schritt Anleitung für den Benutzer, beispielsweise zur Durchführung eines Garvorgangs, auf intuitive Art und Weise ermöglicht. Entsprechend kann der Benutzer mittels der Erfindung beispielsweise von einem Rezeptschritt zum nächsten Rezeptschritt sicher durch ein Garprogramm geführt werden, so dass ein guter Erfolg auch für Hobbyköchinnen und -köche sowie Personen mit eingeschränkten Fähigkeiten gewährleistet werden kann.

Die Erfindung ist jedoch nicht auf die vorliegenden Ausführungsbeispiele und die erläuterten Varianten beschränkt. Siehe hierzu beispielsweise die diesbezüglichen Ausführungen in der Beschreibungseinleitung.

Insbesondere ist die Erfindung nicht auf die konstruktiven, fertigungstechnischen und verfahrenstechnischen Details der Ausführungsbeispiele begrenzt.

So kann es im Unterschied zu den Ausführungsbeispielen vorgesehen sein, dass das erfindungsgemäße Gargefäß alternativ oder zusätzlich ohne eine externe Computereinheit betrieben werden kann. Die in den vorliegenden Ausführungsbeispielen der externen Computereinheit zugeordneten Funktionen sind dann beispielsweise in dem Gargefäß selbst verwirklicht. Entsprechend wird das Gargefäß in Abhängigkeit eines in der Steuerung des Gargefäßs laufenden Automatikprogramms mittels der Steuerung automatisch in den Projektionsmodus überführt, wobei die in dem Projektionsmodus projizierte Benutzerinformation in Abhängigkeit des Automatikprogramms mittels des Projektors erzeugt und emittiert wird. Alternativ oder zusätzlich hierzu kann in Abhängigkeit des Messsignals des Sensors des Gargefäßes mittels des Gargefäßes ein optischer und/oder akustischer Benutzerhinweis an den Benutzer ausgegeben werden.

## Patentansprüche

1. Gargefäß (4) mit
einem Gehäuse (8) und
einem in dem Gehäuse (8) angeordneten Aufnahmeraum (10) zur Aufnahme eines Gargut und/oder eines Küchenutensils,
wobei der Aufnahmeraum (10) von mindestens einer Gehäusewand (12; 36, 38) und einem Gehäuseboden (14) des Gehäuses (8) begrenzt ist,
an dem Gehäuse (8) mindestens eine Projektionseinheit (16) des Gargefäßes (4) angeordnet ist,
wobei die Projektionseinheit (16) in einem Projektionsmodus des Gargefäßes (4) zur Projektion von einer visuell wahrnehmbaren Benutzerinformation auf eine Projektionsfläche des Gehäuses (8) oder in einen freien Luftraum (34) in und/oder über dem Aufnahmeraum (10) angeordnet ist,
**dadurch gekennzeichnet, dass**
die Projektionseinheit (16) spülmaschinengeeignet ausgebildet oder spülmaschinengeeignet an oder in dem Gehäuse (8) angeordnet ist.

2. Gargefäß (4) nach Anspruch 1, **dadurch gekennzeichnet, dass** die Projektionseinheit (16) eine Steuerung (22) und einen mit der Steuerung (22) signalübertragend verbundenen Projektor (24) zur Erzeugung und Emittierung einer Projektion (18) der Benutzerinformation umfasst, bevorzugt, dass die Projektionseinheit (16) zusätzlich mindestens eine der nachfolgend genannten Komponenten aufweist: eine mit der Steuerung (22) signalübertragend verbundene Kommunikationsvorrichtung (26) zum Empfang von Signalen von einer externen Computereinheit (6) und zum Senden von Signalen an die externe Computereinheit (6), eine mit der Steuerung signalübertragend verbundene Ausgabeeinheit zur Ausgabe eines optischen und/oder akustischen Benutzerhinweises an den Benutzer, einen mit der Steuerung (22) energieübertragend verbundenen Energiespeicher (28), eine in einem Projektionsweg zwischen dem Projektor (24) und der Projektionsfläche und/oder dem freien Luftraum (34) angeordnete Optik (30) zur dichten Abdeckung der Projektionseinheit (16) von dem Aufnahmeraum (10), bevorzugt zur optischen Beeinflussung der von dem Projektor (24) emittierten Projektion (18).

3. Gargefäß (4) nach Anspruch 2, **dadurch gekennzeichnet, dass** die Optik (30) als ein Objektiv, bevorzugt ein Weitwinkelobjektiv, und/oder als eine Maske mit Lichtdurchtrittsflächen für einen Lichtdurchtritt und Lichtabdeckungsflächen zur Verhinderung eines Lichtdurchtritts ausgebildet ist.

4. Gargefäß (4) nach einem der Ansprüche 1 bis 3, **dadurch gekennzeichnet, dass** die Projektionseinheit (16) zumindest teilweise, bevorzugt vollständig, in dem Gehäuse (8) oder in einem an dem Gehäuse (8) angeordneten Griff (32) des Gargefäß (4) angeordnet ist.

5. Gargefäß (4) nach einem der Ansprüche 1 bis 4, **dadurch gekennzeichnet, dass** an oder in dem Gehäuse (8) mindestens ein mit dem Aufnahmeraum (10) in Wirkverbindung und mit der Steuerung (22) in Signalübertragungsverbindung stehender Sensor des Gargefäßes (4) zur Erfassung eines Füllstands eines in den Aufnahmeraum (10) eingefüllten Garguts angeordnet ist, bevorzugt, dass mindestens einer des mindestens einen Sensors als ein optischer Sensor, besonders bevorzugt als ein Lichtbrechungssensor, ausgebildet ist, wobei die Steuerung (22) derart ausgebildet ist, dass das Gargefäß (4) und/oder die Kommunikationsvorrichtung (26) in Abhängigkeit eines von dem Sensor an die Steuerung (22) weitergeleiten Messsignals mittels der Steuerung (22) ansteuerbar sind/ist.

6. System (2), umfassend ein Gargefäß (4) und eine mit dem Gargefäß (4) signalübertragend verbundene externe Computereinheit (6), **dadurch gekennzeichnet, dass** das Gargefäß (4) nach einem der Ansprüche 1 bis 5 ausgebildet ist.

7. System (2) nach Anspruch 6, **dadurch gekennzeichnet, dass** die externe Computereinheit (6) derart ausgebildet ist, dass die mindestens eine Projektionseinheit (16) mittels der externen Computereinheit (6) ansteuerbar ist und/oder, dass in Abhängigkeit von dem Messsignal des mindestens einen Sensors des Gargefäßes (4) mittels der externen Computereinheit (6) ein optischer und/oder akustischer Benutzerhinweis an den Benutzer ausgebbar ist.

8. Verfahren zum Betrieb eines Gargefäßes (4) nach einem der Ansprüche 1 bis 5 oder eines Systems (2) nach Anspruch 6 oder 7, wobei in einem Projektionsmodus des Gargefäßes (4) mittels der Projektionseinheit (16) eine visuell wahrnehmbare Benutzerinformation auf eine Projektionsfläche des Gehäuses (8) oder in einen freien Luftraum (34) in und/oder über dem Aufnahmeraum (10) projiziert wird.

9. Verfahren nach Anspruch 8, **dadurch gekennzeichnet, dass** das Gargefäß (4) in Abhängigkeit eines in der Steuerung des Gargefäßes und/oder in der externen Computereinheit (6) laufenden Automatikprogramms mittels der Steuerung (22) und/oder der externen Computereinheit (6) automatisch in den Projektionsmodus überführt wird, wobei die in dem Projektionsmodus projizierte Benutzerinformation in Abhängigkeit des Automatikprogramms mittels des Projektors (24) erzeugt und emittiert wird.

10. Verfahren nach Anspruch 8 oder 9, **dadurch gekennzeichnet, dass** in Abhängigkeit des Messsignals des Sensors des Gargefäßes (4) mittels des Gargefäßes und/oder der externen Computereinheit (6) ein optischer und/oder akustischer Benutzerhinweis an den Benutzer ausgegeben wird.

## Claims

1. Cooking vessel (4) comprising
a housing (8) and
a receiving space (10) arranged in the housing (8) for receiving food to be cooked and/or a kitchen utensil,
the receiving space (10) being delimited by at least one housing wall (12; 36, 38) and a housing bottom (14) of the housing (8),
at least one projection unit (16) of the cooking vessel (4) being arranged on the housing (8),
the projection unit (16), in a projection mode of the cooking vessel (4), being arranged to project visually perceptible user information onto a projection surface of the housing (8) or into a free air space (34) in and/or above the receiving space (10),
**characterised in that**
the projection unit (16) is designed to be dishwasher-safe or is arranged in or on the housing (8) in a dishwasher-safe manner.

2. Cooking vessel (4) according to claim 1, **characterised in that** the projection unit (16) comprises a control means (22) and a projector (24), which is connected to the control means (22) for signal transmission, for generating and emitting a projection (18) of the user information, preferably **in that** the projection unit (16) additionally has at least one of the following components: a communication device (26), which is connected to the control means (22) for signal transmission, for receiving signals from an external computer unit (6) and for sending signals to the external computer unit (6), an output unit, which is connected to the control means for signal transmission, for outputting an optical and/or acoustic user instruction to the user, an energy storage device (28) connected to the control means (22) for energy transmission, an optical part (30), which is arranged in a projection path between the projector (24) and the projection surface and/or the free air space (34), for sealingly covering the projection unit (16) with respect to the receiving space (10), preferably for optically influencing the projection (18) emitted by the projector (24).

3. Cooking vessel (4) according to claim 2, **characterised in that** the optical part (30) is designed as a lens, preferably a wide-angle lens, and/or as a mask having light transmission surfaces for light transmission and light covering surfaces for preventing light transmission.

4. Cooking vessel (4) according to any of claims 1 to 3, **characterised in that** the projection unit (16) is arranged at least partially, preferably completely, in the housing (8) or in a handle (32) of the cooking vessel (4) arranged on the housing (8).

5. Cooking vessel (4) according to any of claims 1 to 4,
**characterised in that** at least one sensor of the cooking vessel (4), which is operatively connected to the receiving space (10) and is connected to the control means (22) for signal transmission in order to detect a fill level of food placed in the receiving space (10), is arranged on or in the housing (8), preferably **in that** at least one of the at least one sensor is designed as an optical sensor, particularly preferably as a refraction sensor, the control means (22) being designed such that the cooking vessel (4) and/or the communication device (26) can be controlled by means of the control means (22) depending on a measurement signal forwarded from the sensor to the control means (22).

6. System (2) comprising a cooking vessel (4) and an external computer unit (6) connected to the cooking vessel (4) for signal transmission, **characterised in that** the cooking vessel (4) is designed according to any of claims 1 to 5.

7. System (2) according to claim 6, **characterised in that** the external computer unit (6) is designed such that the at least one projection unit (16) can be controlled by means of the external computer unit (6), and/or **in that,** depending on the measurement signal of the at least one sensor of the cooking vessel (4), an optical and/or acoustic user instruction can be output to the user by means of the external computer unit (6).

8. Method for operating a cooking vessel (4) according to any of claims 1 to 5 or for operating a system (2) according to claim 6 or 7, wherein, in a projection mode of the cooking vessel (4), visually perceptible user information is projected by means of the projection unit (16) onto a projection surface of the housing (8) or into free air space (34) in and/or above the receiving space (10).

9. Method according to claim 8, **characterised in that** the cooking vessel (4) is automatically switched to the projection mode by means of the control means (22) and/or the external computer unit (6) depending on an automatic program running in the control means of the cooking vessel and/or in the external computer unit (6), the user information projected in the projection mode being generated and emitted by means of the projector (24) depending on the automatic program.

10. Method according to claim 8 or claim 9, **characterised in that,** depending on the measurement signal of the sensor of the cooking vessel (4), an optical and/or acoustic user instruction is output to the user by means of the cooking vessel and/or the external computer unit (6).

## Revendications

1. Récipient de cuisson (4) comportant
un boîtier (8) et
un espace de réception (10) disposé dans le boîtier (8) pour la réception d'un aliment à cuire et/ou d'un ustensile de cuisine,
dans lequel l'espace de réception (10) est délimité par au moins une paroi de boîtier (12 ; 36, 38) et un fond de boîtier (14) du boîtier (8),
au moins une unité de projection (16) du récipient de cuisson (4) est disposée sur le boîtier (8),
dans lequel l'unité de projection (16) est disposée dans un mode de projection du récipient de cuisson (4) pour la projection d'informations utilisateur visuellement perceptibles sur une surface de projection du boîtier (8) ou dans un espace d'air libre (34) dans l'espace de réception (10) et/ou au-dessus de celui-ci,
**caractérisé en ce que**
l'unité de projection (16) est réalisée de manière à être adaptée au lave-vaisselle ou est disposée sur ou dans le boîtier (8) de manière à être adaptée au lave-vaisselle.

2. Récipient de cuisson (4) selon la revendication 1, **caractérisé en ce que** l'unité de projection (16) comprend une commande (22) et un projecteur (24) connecté à la commande (22) par transmission de signaux pour la génération et l'émission d'une projection (18) des informations utilisateur, de préférence **en ce que** l'unité de projection (16) présente en outre au moins l'un des composants mentionnés ci-après : un dispositif de communication (26) connecté à la commande (22) par transmission de signaux pour la réception de signaux en provenance d'une unité informatique externe (6) et pour l'envoi de signaux à l'unité informatique externe (6), une unité d'émission connectée à la commande par transmission de signaux pour l'émission d'une indication utilisateur optique et/ou acoustique à l'utilisateur, un accumulateur d'énergie (28) connecté à la commande (22) par transmission d'énergie, une optique (30) disposée dans un trajet de projection entre le projecteur (24) et la surface de projection et/ou l'espace d'air libre (34) pour le recouvrement de manière étanche de l'unité de projection (16) par rapport à l'espace de réception (10), de préférence pour influencer optiquement la projection (18) émise par le projecteur (24).

3. Récipient de cuisson (4) selon la revendication 2, **caractérisé en ce que** l'optique (30) est réalisée comme un objectif, de préférence un objectif grand angle, et/ou comme un masque comportant des surfaces de passage de la lumière pour un passage de la lumière et des surfaces de recouvrement de la lumière pour empêcher un passage de la lumière.

4. Récipient de cuisson (4) selon l'une des revendications 1 à 3, **caractérisé en ce que** l'unité de projection (16) est disposée au moins partiellement, de préférence entièrement, dans le boîtier (8) ou dans une poignée (32) du récipient de cuisson (4) disposée sur le boîtier (8).

5. Récipient de cuisson (4) selon l'une des revendications 1 à 4, **caractérisé en ce qu'**est disposé sur ou dans le boîtier (8) au moins un capteur du récipient de cuisson (4) en connexion active avec l'espace de réception (10) et en connexion par transmission de signaux avec la commande (22) pour la détection d'un niveau de remplissage d'un aliment à cuire introduit dans l'espace de réception (10), de préférence, **en ce qu'**au moins l'un parmi l'au moins un capteur est réalisé comme un capteur optique, de manière particulièrement préférée comme un capteur de réfraction de la lumière, dans lequel la commande (22) est réalisée de telle sorte que le récipient de cuisson (4) et/ou le dispositif de communication (26) peuvent être commandés au moyen de la commande (22) en fonction d'un signal de mesure transmis par le capteur à la commande (22).

6. Système (2), comprenant un récipient de cuisson (4) et une unité informatique externe (6) connectée au récipient de cuisson (4) par transmission de signaux, **caractérisé en ce que** le récipient de cuisson (4) est réalisé selon l'une des revendications 1 à 5.

7. Système (2) selon la revendication 6, **caractérisé en ce que** l'unité informatique externe (6) est réalisée de telle sorte que l'au moins une unité de projection (16) peut être commandée au moyen de l'unité informatique externe (6) et/ou **en ce qu'**en fonction du signal de mesure de l'au moins un capteur du récipient de cuisson (4), une indication utilisateur optique et/ou acoustique peut être émise à l'utilisateur au moyen de l'unité informatique externe (6).

8. Procédé permettant de faire fonctionner un récipient de cuisson (4) selon l'une des revendications 1 à 5 ou un système (2) selon la revendication 6 ou 7, dans lequel, dans un mode de projection du récipient de cuisson (4), des informations utilisateur visuellement perceptibles sont projetées au moyen de l'unité de projection (16) sur une surface de projection du boîtier (8) ou dans un espace d'air libre (34) dans l'espace de réception (10) et/ou au-dessus de celui-ci.

9. Procédé selon la revendication 8, **caractérisé en ce que** le récipient de cuisson (4) est automatiquement transféré dans le mode de projection au moyen de la commande (22) et/ou de l'unité informatique externe (6) en fonction d'un programme automatique en cours dans la commande du récipient de cuisson et/ou dans l'unité informatique externe (6), dans lequel les informations utilisateur projetées dans le mode de projection sont générées et émises au moyen du projecteur (24) en fonction du programme automatique.

10. Procédé selon la revendication 8 ou 9, **caractérisé en ce qu'**en fonction du signal de mesure du capteur du récipient de cuisson (4), une indication utilisateur optique et/ou acoustique est émise à l'utilisateur au moyen du récipient de cuisson et/ou de l'unité informatique externe (6).
